# EUROPEAN PATENT APPLICATION

(11) **EP 4 435 348 A1**
(43) Date of publication of application: **25.09.2024**
(21) Application number: 23163988.1
(22) Date of filing: 24.03.2023
(51) Int. Cl.: F25B 35/04, B01D 46/00, F25B 43/00, F25B 43/04, B01D 53/26

(54) **SPLIT-TYPE AIR CONDITIONING AND/OR HEAT PUMP SYSTEM, METHOD OF GASSING AND/OR RE-GASSING A REFRIGERANT CIRCUIT OF A SPLIT-TYPE AIR CONDITIONING AND/OR HEAT PUMP SYSTEM, AND METHOD FOR REGENERATING AT LEAST ONE ADSORPTION DEVICE OF A SPLIT-TYPE AIR CONDITIONING AND/OR HEAT PUMP SYSTEM**

(71) Applicant: Mitsubishi Electric R&D Centre Europe B.V., Livingston EH54 5DJ (GB); MITSUBISHI ELECTRIC CORPORATION, Chiyoda-ku Tokyo 100-8310 (JP)
(72) Inventor: OLKIS, Dr. Christopher, Livingston, EH54 5DJ (GB)
(74) Representative: Pfenning, Meinig & Partner mbB

(57) **Abstract**

The present invention is directed to a split-type air conditioning and/or heat pump system comprising an outdoor unit and an indoor unit, wherein the split-type air conditioning and/or heat pump system comprises a refrigerant circuit configured by connecting a compressor, at least one adsorption device for adsorbing at least moisture, oxygen, and/or nitrogen present in the refrigerant circuit, a condenser, an expansion valve, and an evaporator by piping, and wherein the at least one adsorption device is disposed in a portion of the refrigerant circuit in which the refrigerant is substantially in a gaseous state. Furthermore, the present invention is directed to a method of gassing and/or re-gassing the refrigerant circuit of the split-type air conditioning and/or heat pump system according to the present invention, and also to a method for regenerating the at least one adsorption device of the split-type air conditioning and/or heat pump system according to the present invention.

## Description

The present invention is directed to a split-type air conditioning and/or heat pump system comprising an outdoor unit and an indoor unit, wherein the split-type air conditioning and/or heat pump system comprises a refrigerant circuit configured by connecting a compressor, at least one adsorption device for adsorbing at least moisture, oxygen, and/or nitrogen present in the refrigerant circuit, a condenser, an expansion valve, and an evaporator by piping, and wherein the at least one adsorption device is disposed in a portion of the refrigerant circuit in which the refrigerant is substantially in a gaseous state. Furthermore, the present invention is directed to a method of gassing and/or re-gassing the refrigerant circuit of the split-type air conditioning and/or heat pump system according to the present invention, and also to a method for regenerating the at least one adsorption device of the split-type air conditioning and/or heat pump system according to the present invention.

Split-type units for air conditioning and/or heat pump systems with an indoor unit and outdoor unit need to be charged with refrigerant after the installation. At the moment, anyone can install the outdoor and indoor units and connect them with pipes. For the final step, it is recommended, that customers call a trained refrigerant-gas specialist to come to their home, evacuate the refrigerant pipes with a vacuum pump to remove air and moisture. Moisture, oxygen, and/or nitrogen can be detrimental to the vapour compression refrigeration cycle. Afterwards, the specialist fills the system with refrigerant. Hence, the established way of the units' installation requires special refrigerant gas training and a vacuum pump, which requires maintenance and is expensive. Numerous installations are necessary to amortise the purchase of a vacuum pump.

Starting here from, it was the object of the present invention to provide a split-type air conditioning and/or heat pump system that can be installed in an easier manner.

This object is solved by a split-type air conditioning and/or heat pump system having the features of patent claim 1, by a method of gassing and/or re-gassing a refrigerant circuit of a split-type air conditioning and/or heat pump system having the features of patent claim 10, and by a method for regenerating a at least one adsorption device of a split-type air conditioning and/or heat pump system having the features of patent claim 14. The dependent claims represent advantageous further developments.

According to the present invention, a split-type air conditioning and/or heat pump system is provided, the split-type air conditioning and/or heat pump system comprising an outdoor unit and an indoor unit, wherein the split-type air conditioning and/or heat pump system comprises a refrigerant circuit configured by connecting a compressor, at least one adsorption device for adsorbing (at least) moisture (e.g. water) and/or oxygen and/or nitrogen present in the refrigerant circuit, a condenser, an expansion valve, and an evaporator by piping, and wherein the at least one adsorption device is disposed in a portion of the refrigerant circuit in which the refrigerant is substantially in a gaseous state.

The split-type air conditioning and/or heat pump system according to the present invention comprises at least one adsorption device. The at least one adsorption device is able to adsorb at least moisture (e.g. water) present in the refrigerant circuit and/or oxygen present in the refrigerant circuit and/or nitrogen present in the refrigerant circuit. Thus, at least moisture, oxygen, and/or nitrogen, which might be detrimental to the vapour compression refrigeration cycle, can be adsorbed by the at least one adsorption device and can thus be removed from the refrigeration cycle without pulling vacuum. Instead of pulling a vacuum before filling the system with refrigerant, the system can be directly filled with refrigerant creating an air-refrigerant mixture. The at least one adsorption device comprised by the split-type air conditioning and/or heat pump system can then remove moisture, oxygen, and/or nitrogen from the refrigeration circuit. Thus, using a vacuum pump is not necessary for removing moisture, oxygen, and/or nitrogen from the refrigerant circuit so that the split-type air conditioning and/or heat pump system can be installed in an easier manner and also costs for a vacuum pump and its maintenance can be saved.

According to the present invention, the at least one adsorption device is disposed in a portion of the refrigerant circuit in which the refrigerant is substantially in a gaseous state. In this context, a portion of the refrigerant circuit in which the refrigerant is substantially in a gaseous state can be understood as portion of the refrigerant circuit in which at least 98 vol.-%, preferably at least 99 vol.-%, more preferably at least 99.9 vol.-%, of the refrigerant are in a gaseous state. Preferably, the at least one adsorption device is disposed in a portion of the refrigerant circuit in which the refrigerant is in a gaseous state.

For example, the at least one adsorption device is disposed in the refrigerant circuit between a refrigerant outlet of the evaporator and a refrigerant inlet of the compressor and/or between a refrigerant outlet of the compressor and a refrigerant inlet of the condenser.

Since the at least one adsorption device is disposed in a portion of the refrigerant circuit in which the refrigerant is substantially in a gaseous state (i.e. in a gaseous portion of the refrigerant circuit), the adsorption of at least moisture, oxygen, and/or nitrogen present in the refrigerant circuit is significantly simplified. In detail, if the at least one adsorption device was instead disposed in a portion of the refrigerant circuit in which the refrigerant is substantially in a liquid state (e.g. between an outlet of the condenser and an inlet of the expansion valve), moisture or water would also be in a liquid state and would thus release much heat to an adsorption material of the adsorption device when it is adsorbed, which can result in a damage or destruction of the adsorption material. Furthermore, since the air with oxygen and nitrogen is present in a gaseous state, either two phases would be present, i.e. a gaseous phase of air (comprising oxygen and nitrogen) and a liquid phase of refrigerant, or the gaseous air would be dissolved in the refrigerant. In both cases, the adsorption of oxygen and/or nitrogen by an adsorption device is very challenging due to higher requirements for the heat/mass transfer of the system and the used materials, for e.g. an adsorption material used in the adsorption device while in addition also diffusion within the liquid needs to be considered. Furthermore, if the at least one adsorption device was disposed in a portion of the refrigerant circuit in which the refrigerant is substantially in a liquid state, the system will lead to a larger overall pressure drop because liquid passes through the adsorption device instead of gas. Thus, it will take additional compressor energy to always pump the liquid through the adsorption device. For these reasons, it is clearly advantageous that the at least one adsorption device is disposed in a portion of the refrigerant circuit in which the refrigerant is in a gaseous state.

The at least one adsorption device is suitable for adsorbing (at least a part of) (at least) moisture (e.g. water), oxygen, and/or nitrogen present in the refrigerant circuit. The moisture (e.g. water), oxygen, and/or nitrogen can be present within air present in the refrigerant circuit. Thus, the at least one adsorption device can preferably be suitable to adsorb moisture and/or the components of air present in the refrigerant circuit.

Preferably, the at least one adsorption device is at least one adsorption device for adsorbing (at least) moisture (e.g. water), oxygen, and nitrogen present in the refrigerant circuit. More preferably, the at least one adsorption device is additionally suitable for adsorbing one or more substances (preferably all substances) present in the refrigerant circuit selected from the group consisting of carbon dioxide, argon, neon, helium, methane, krypton, and mixtures thereof. Thus, it is preferred that the at least one adsorption device is at least one adsorption device for adsorbing moisture (e.g. water), oxygen, and nitrogen present in the refrigerant circuit, and also at least one substance present in the refrigerant circuit selected from the group consisting of carbon dioxide, argon, neon, helium, methane, krypton, and mixtures thereof. Most preferably, the at least one adsorption device is at least one adsorption device for adsorbing moisture (e.g. water), oxygen, nitrogen, carbon dioxide, argon, neon, helium, methane, and krypton. Thus, the at least one adsorption device can preferably be suitable to adsorb moisture and/or or all components of air present in the refrigerant circuit.

A preferred embodiment of the split-type air conditioning and/or heat pump system according to the present invention is characterized in that the at least one adsorption device is disposed in the refrigerant circuit between a refrigerant outlet of the compressor and a refrigerant inlet of the condenser. If the at least one adsorption device is disposed in the refrigerant circuit between a refrigerant outlet of the compressor and a refrigerant inlet of the condenser, it is present on the high-pressure side of the refrigerant circuit. Since the at least one adsorption device (e.g. the adsorbing material comprised therein) has a higher uptake (i.e. it adsorbs more) at higher pressure, the at least one adsorption device can remove moisture, oxygen, and/or nitrogen more efficiently from the refrigerant circuit if it is disposed in the refrigerant circuit between a refrigerant outlet of the compressor and a refrigerant inlet of the condenser.

A further preferred embodiment of the split-type air conditioning and/or heat pump system according to the present invention is characterized in that the at least one adsorption device comprises at least one adsorption material, wherein the at least one adsorption material
- is selected from the group consisting of zeolites, preferably zeolite 4A, zeolite 5A, zeolite 13X; activated alumina; silica gel; activated carbon; molecular sieve carbon; metal-organic frameworks; polymeric adsorbents; and mixtures and combinations thereof, and/or
- is present in the form of powder, in the form of beads, in the form of pellets, and/or in the form of monoliths, and/or
- is present in an amount of up to 100 kg, preferably up to 35 kg, more preferably from 0.3 kg to 2 kg, and/or
- comprises a plurality of different adsorption materials which are present as a mixture or separate from each other in the at least one adsorption device, and/or
- has a higher affinity towards moisture, oxygen, and/or nitrogen than towards a refrigerant flowing through the refrigerant circuit.

The adsorbent can be carefully selected according to the adsorbent's properties and its adsorption characteristics suitable for the mixture of air and refrigerant at different pressures, temperatures and concentrations. The adsorbent can be present in different structural conditions, for example beads and or pellets of various sizes, powder, and or monoliths. It can further be beneficial to use different types of adsorbents in the at least one adsorption device. The material can be carefully selected to remove or filter different components of the air, e.g. nitrogen and oxygen, from the air-refrigerant mixture. Thus, the adsorbent can have a high affinity to the components that should be adsorbed, i.e. moisture, oxygen, and/or nitrogen and also to other components of air, but a low affinity to the refrigerant. The refrigerant can vary between different air conditioners or heat pumps. Thus, the adsorbent can be selected depending on the refrigerant. Possible adsorbents for the process can include but are not limited to various zeolites (e.g. 4A, 5A, 13X), but also activated alumina, silica gel, activated carbon, molecular sieve carbon, metal-organic frameworks and polymeric adsorbents. They can also include different combinations of adsorbents contained or split within the at least one adsorption device.

A further preferred embodiment of the split-type air conditioning and/or heat pump system according to the present invention is characterized in that the at least one adsorption device comprises an outer casing, wherein the outer casing preferably
- is tubular, spherical, triangular, or rectangular, and/or
- comprises or consists of a material selected from the group consisting of metals, alloys, plastics, ceramics, and also mixtures and combinations thereof, wherein the outer casing more preferably comprises or consists of at least one metal and/or at least one alloy, even more preferably of copper and/or stainless steel, and/or
- has a diameter from 25 mm to 300 mm, preferably from 50 mm to 100 mm, and/or
- has a length from 50 mm to 500 mm, preferably from 100 mm to 300 mm.

For example, the at least one adsorption device could just be a single or multiple tubes or pipes, e.g. comprised of copper or stainless steel, filled with adsorbent and a filter, e.g. a mesh or glass wool on both sides. It can be beneficial, if the pipe has a large diameter to contain more adsorption material on the same length of pipe. A tubular design can be advantageous in some applications, but any shape of the at least one adsorption column is possible, e.g. spherical, triangular or rectangular. The selection of the shape can depend on the space available within or outside of the unit.

Preferably, the at least one adsorption device can be at least one adsorption column.

A further preferred embodiment of the split-type air conditioning and/or heat pump system according to the present invention is characterized in that the at least one adsorption device comprises
- a filter, wherein the filter preferably comprises or consists of mesh and/or glass wool, and/or
- an (refrigerant) inlet port and an (refrigerant) outlet port to connect the at least one adsorption device to the refrigerant circuit, and/or
- an ambient air valve or port to open the at least one adsorption device to the ambient air and/or to seal it from the ambient air, and/or
- a (charging) port for charging the refrigerant circuit with refrigerant and/or discharging the refrigerant circuit.

A filter can force the adsorption material to remain in place inside the at least one adsorption device. This can be, in particular, advantageous when using a powder or beads as adsorbent, whereas monoliths might not require a filter.

Preferably, the the at least one adsorption device comprises a (charging and/or discharging) port for charging the refrigerant circuit with refrigerant and/or discharging the refrigerant circuit (i.e. removing refrigerant from the refrigerant circuit). When discharging the refrigerant circuit, de-adsorption of adsorbed moisture and/or gases from the at least one adsorption device can take place. Thus, it is advantageous to discharge the refrigerant circuit via a port comprised by the at least one adsorption device since it prevents the de-adsorbed moisture and/or gases from entering (other parts of) the refrigerant circuit. The port comprised by the at least one adsorption device therefore provides the shortest route from the adsorption device to a collection tank. When charging the refrigerant circuit with refrigerant via the port comprised by the at least one adsorption device, no de-adsorbed moisture and/or gases would enter the refrigerant circuit since the at least one adsorption device is in a "fresh" state and does not comprise any adsorbed moisture and/or gases. However, when charging the refrigerant circuit with refrigerant via the port comprised by the at least one adsorption device, the incoming refrigerant flows through the at least one adsorption device when entering the refrigerant circuit and thus moisture, oxygen, and/or nitrogen present in the incoming refrigerant can be adsorbed by the at least one adsorption device so that it is prevented that this moisture, oxygen, and/or nitrogen enters the refrigerant circuit. As a result, less cycles may be needed to remove moisture, oxygen, and/or nitrogen from the refrigerant circuit before the at least one adsorption device can be bypassed.

Preferably, the ambient air port to open the at least one adsorption device to the ambient air and/or to seal it from the ambient air can also act as a (charging and/or discharging) port for charging the refrigerant circuit with refrigerant and/or discharging the refrigerant circuit. Correspondingly, it is preferred that the (charging and/or discharging) port for charging the refrigerant circuit with refrigerant and/or discharging the refrigerant circuit can also act as ambient air port to open the at least one adsorption device to the ambient air and/or to seal it the from the ambient air. Thus, it is also preferred that the at least one adsorption device comprises only (at least) one port that acts both as (charging and/or discharging) port for charging the refrigerant circuit with refrigerant and/or discharging the refrigerant circuit and as ambient air port to open the at least one adsorption device to the ambient air and/or to seal it from the ambient air.

A further preferred embodiment of the split-type air conditioning and/or heat pump system according to the present invention is characterized in that the refrigerant circuit comprises at least two bypass valves disposed in a portion of the refrigerant circuit in which the refrigerant is substantially in a gaseous state, wherein the refrigerant circuit comprises at least one bypass branch disposed between the at least two bypass valves, and wherein the at least one adsorption device is disposed on the at least one bypass branch. Preferably, the at least two bypass valves are disposed between the refrigerant outlet of the compressor and the refrigerant inlet of the condenser.

It can be beneficial to place the at least one adsorption device on a bypass branch to the main refrigeration circuit. The adsorption device adds to the pressure drop of the refrigerant circuit, where any added pressure drop increases the electricity consumption of the compressor. The adsorption device is only required for a short period of time after the system's installation. Thus, the ability to seal the adsorption device on the bypass branch from the main branch can save energy over the unit's lifetime. For examples, for the first hours of the unit's lifetime, the refrigerant can pass through the at least one adsorption device and all traces of moisture, oxygen, and/or nitrogen are removed from the refrigerant. Afterwards, the bypass branch containing the air removal column can be isolated from the refrigeration circuit by using two valves. The valves can be e.g. manual valves and/or automated valves, including solenoid valves, ball valves, needle valves.

In a different preferred embodiment of the present invention the at least one adsorption column can also be installed on the main branch. Here, it can be beneficial to select an adsorbent with a low pressure drop, e.g. larger beads or monoliths. It is further possible to have at least one first adsorption device on the main branch and at least one second adsorption on the bypass branch.

A further preferred embodiment of the split-type air conditioning and/or heat pump system according to the present invention is characterized in that the at least one bypass branch comprises at least one first bypass branch and at least one second bypass branch, wherein the at least one adsorption device comprises at least one first adsorption device, which is disposed on the at least one first bypass branch, and at least one second adsorption device, which is disposed on the at least one second bypass branch.

It is further preferred that
- the refrigerant circuit comprises a connection to at least one refrigerant container containing refrigerant that can be added to the refrigerant circuit, the connection to the at least one refrigerant container being disposed on the at least one second bypass branch upstream of the at least one second adsorption device, and/or
- the at least one first adsorption device comprises at least one adsorption material having an oxygen affinity characterized by a separation factor α > 10, preferably *α* > 100.

If a flammable refrigerant is used in the system, a mixture of oxygen (from the air) and refrigerant should be avoided for safety reasons. This can be achieved by using an additional adsorption device (e.g. a smaller additional adsorption device) for oxygen removal prior to filling the system with refrigerant from the refrigerant container. The additional adsorption device can be filled with an adsorption material with high affinity to oxygen. Before filling the system with refrigerant, the compressor can move the air inside the refrigerant pipework through the additional adsorption device to remove oxygen. It can be beneficial to pre-pressurise the additional adsorption device with nitrogen to avoid low vacuum in the pipework. During the oxygen removal step, the at least one (main) adsorption device (and a refrigerant container) can be bypassed. It can be beneficial to add an optional oxygen indicator with an optional viewport to check for remaining oxygen before filling the system with propane. It can be beneficial to place the oxygen indicator either behind the additional adsorption device or on a separate bypass line. Once oxygen is removed from the refrigerant pipework, refrigerant is mixed with the remaining, oxygen-free air and the adsorption device can be used to remove moisture and/or nitrogen (and preferably also all other non-refrigerant gases) from the refrigerant circuit.

A further preferred embodiment of the split-type air conditioning and/or heat pump system according to the present invention is characterized in that
- the outdoor unit comprises the compressor, the at least one adsorption device, the expansion valve, and an outdoor unit heat exchanger which is configured to function as the condenser, is configured to function as the evaporator, or is configured to function as the condenser or the evaporator, and/or
- the indoor unit comprises an indoor unit heat exchanger which is configured to function as the condenser, is configured to function as the evaporator, or is configured to function as the condenser or the evaporator.

A further preferred embodiment of the split-type air conditioning and/or heat pump system according to the present invention is characterized in that the refrigerant circuit comprises
- at least one filter drier for removing moisture, wherein the at least one filter drier is preferably disposed between a refrigerant outlet of the condenser and a refrigerant inlet of the expansion valve, and/or
- a four-way valve with which the refrigerant flow within a part of the refrigerant circuit can be reversed,
- a connection to at least one refrigerant container containing refrigerant that can be added to the refrigerant circuit, wherein the connection to the at least one refrigerant container is preferably disposed between a refrigerant outlet of the evaporator and the at least one adsorption device, more preferably between a refrigerant outlet of the compressor and the at least one adsorption device.

The present invention is also directed to a method of gassing and/or re-gassing a refrigerant circuit of a split-type air conditioning and/or heat pump system according to the present invention, the method comprising:
a) Filling refrigerant into the refrigerant circuit so as to allow the refrigerant flowing through the refrigerant circuit and thus through the at least one adsorption device, and
b) Operating the split-type air conditioning and/or heat pump system for a period of time in order for (at least) moisture, oxygen, and/or nitrogen present in the refrigerant circuit to be adsorbed by the at least one adsorption device.

A preferred embodiment of the method (of gassing and/or re-gassing a refrigerant circuit of a split-type air conditioning and/or heat pump system) according to the present invention is characterized in that
- before step a), the refrigerant circuit is formed by connecting the outdoor unit with the indoor unit via pipes, and/or
- the period of time for which the split-type air conditioning and/or heat pump system is operated in step b) is from 0.5 h to 96 h, preferably from 1 h to 48 h.

A further preferred embodiment of the method (of gassing and/or re-gassing a refrigerant circuit of a split-type air conditioning and/or heat pump system) according to the present invention is characterized in that the refrigerant circuit comprises at least two bypass valves disposed in a portion of the refrigerant circuit in which the refrigerant is substantially in a gaseous state, preferably between the refrigerant outlet of the compressor and the refrigerant inlet of the condenser, wherein the refrigerant circuit comprises at least one bypass branch extending between the at least two bypass valves, wherein the at least one adsorption device is disposed on the at least one bypass branch, and wherein, after the period of time has elapsed, (at least two of) the at least two bypass valves are closed to cut off the bypass branch from the refrigerant flow.

A further preferred embodiment of the method (of gassing and/or re-gassing a refrigerant circuit of a split-type air conditioning and/or heat pump system) according to the present invention is characterized in that the at least one bypass branch comprises at least one first bypass branch and at least one second bypass branch, wherein the at least one adsorption device comprises at least one first adsorption device, which is disposed on the at least one first bypass branch, and at least one second adsorption device, which is disposed on the at least one second bypass branch

It is preferred that
- the refrigerant circuit comprises a connection to at least one refrigerant container containing refrigerant that can be added to the refrigerant circuit, the connection to the at least one refrigerant container being disposed on the at least one second bypass branch upstream of the at least one second adsorption device, wherein preferably at least a part of the refrigerant contained in the refrigerant container is added to the refrigerant circuit in step a), in step b), and/or after step b), and/or
- the at least one first adsorption device comprises at least one adsorption material having an oxygen affinity characterized by a separation factor *α* > 10, preferably *α* > 100,wherein, before step a), the compressor is moving air inside the refrigerant circuit via the at least one first bypass branch through the at least one first adsorption device.

The at least one refrigerant container can be comprised by the split-type air conditioning and/or heat pump system.

The present invention is also directed to a method for regenerating at least one adsorption device of a split-type air conditioning and/or heat pump system according to the present invention, wherein the at least one adsorption device comprises an ambient air valve or port to open the at least one adsorption device to the ambient air and/or to seal it the from the ambient air, the method comprising
- opening the ambient air valve or port to the ambient air for a period of time, and/or
- disassembling the at least one adsorption device from the split-type air conditioning and/or heat pump system and heating the disassembled at least one adsorption device.

A preferred embodiment of the method (for regenerating at least one adsorption device of a split-type air conditioning and/or heat pump system) according to the present invention is characterized in that
- the period of time for which the ambient air valve is opened up to 48 h, preferably from 0.01 h to 1 h, and/or
- the at least one adsorption device is heated while the ambient air valve is opened, preferably at a temperature up to 500 °C, preferably from 150 °C to 300 °C, and/or
- the disassembled at least one adsorption device is heated at a temperature from 50 °C to 500 °C, preferably from 150 °C to 300 °C, for a period of time from 5 min to 4 h, preferably, from 30 min to 90 min.

If refrigerant needs to be refilled during the unit's lifetime, the at least one adsorption device can be regenerated, for example, by one of the two following approaches:
- Depressurising the column: The refrigerant circuit is often pressurised. Hence, gas can be released from the adsorption device for the regeneration of the adsorption material by simply opening a valve to the ambient pressure for a short time. The equilibrium adsorption uptake capacity normally increases with pressure. So, depressurising would desorb air from the adsorbent and therefore regenerate the adsorbent. When the system is pressurised with new refrigerant, the regenerated material can adsorb new air again and remove it from the refilled refrigerant.
- The adsorption device can be disassembled (from the outdoor unit), heated to suitable temperature for a specified time, e.g. 200 °C for 1 h. Afterwards, the hot adsorption device is inserted back (into the outdoor unit). Alternatively, the hot adsorption device can be sealed from the ambient air, e.g. using valves. Sealing the adsorption device allows the storage outside the unit for long periods of time.

The present invention will be explained in more detail with reference to the following figures and examples without restricting the invention to the specifically shown parameters.

### Example 1

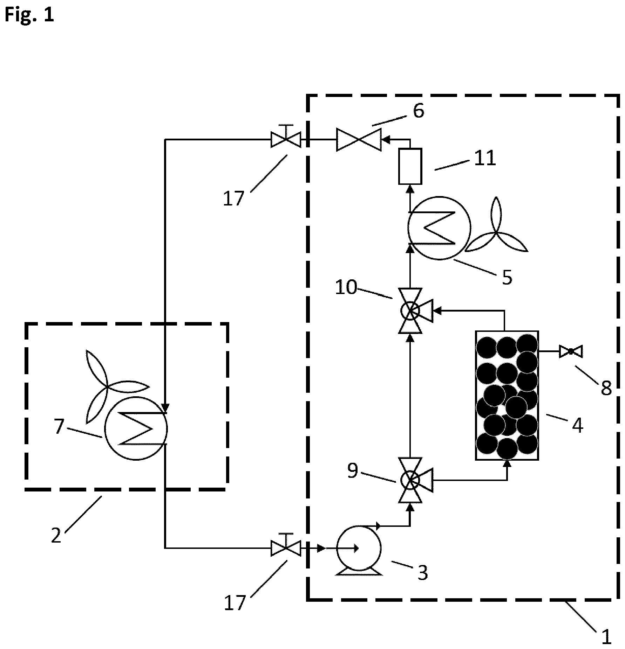

Fig. 1 shows a first example (Example 1) of a system according to the present invention. It is an example for the implementation of an adsorption device in a split type of air-to-air refrigeration cycle for an air conditioning system. The system comprises an outdoor unit 1 and an indoor unit 2, wherein the split-type air conditioning system comprises a refrigerant circuit configured by connecting a compressor 3, an adsorption device 4 for adsorbing at least moisture, oxygen, and/or nitrogen present in the refrigerant circuit, an outdoor unit heat exchanger 5 configured to function as a condenser, an expansion valve 6, and an indoor unit heat exchanger 7 configured to function as an evaporator by piping. The adsorption device 4 is disposed in a portion of the refrigerant circuit in which the refrigerant is substantially in a gaseous state, between a refrigerant outlet of the compressor 3 and a refrigerant inlet of the condenser. The adsorption device 4 has tubular outer casing and comprises at least one adsorption material (illustrated by black spheres in Fig. 1).

The adsorption device comprises a charging and/or discharging port 8 for charging the refrigerant circuit with refrigerant and/or discharging the refrigerant circuit. The charging and/or discharging port 8 can have a stop valve.

The refrigerant circuit of the system Example 1 further comprises two 3-way valves as bypass valves 9, 10 and a bypass branch disposed between the two bypass valves 9, 10, wherein the adsorption device 4 is disposed on the bypass branch.

The system of Example 1 also features an optional filter drier 11 to remove moisture during regular operation, when the air removal device is sealed from the refrigerant circuit by the bypass valves 9, 10.

### Example 2

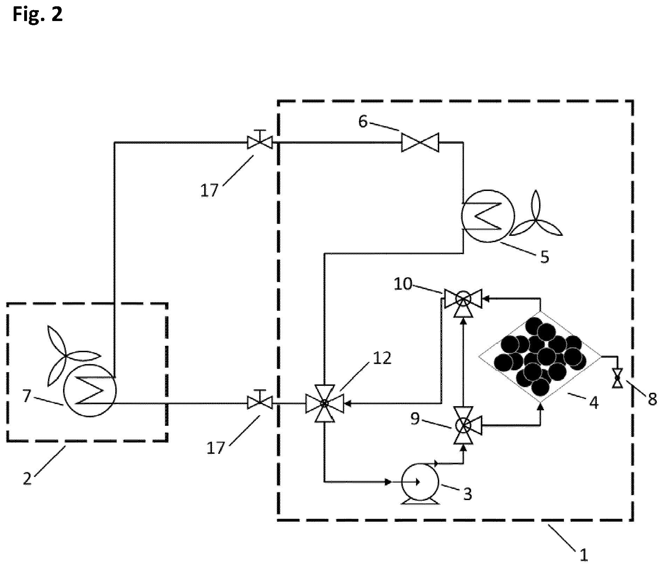

Fig. 2 shows a second example (Example 2) of a system according to the present invention. It is an example for the integration of the adsorption device into an air-to-air unit for heating and cooling (i.e. a split-type air conditioning and heat pump system), where the refrigerant flow can be reversed using a four-way valve 12. The system comprises an outdoor unit 1 and an indoor unit 2, and also a refrigerant circuit configured by connecting a compressor 3, an adsorption device 4 for adsorbing at least moisture, oxygen, and/or nitrogen present in the refrigerant circuit, an outdoor unit heat exchanger 5 configured to function as a condenser or an evaporator depending on the adjustment of the four-way valve 12, an expansion valve 6, and an indoor unit heat exchanger 7 configured to function as a condenser or an evaporator depending on the adjustment of the four-way valve 12 by piping.

As it is already the case in the system of Example 1, the adsorption device 4 of the system of Example 2 is also disposed in a portion of the refrigerant circuit in which the refrigerant is substantially in a gaseous state, between a refrigerant outlet of the compressor 3 and a refrigerant inlet of the condenser. In detail, the adsorption device is disposed between a refrigerant outlet of the compressor 3 and the four-way valve 12 to ensure that it is disposed between a refrigerant outlet of the compressor 3 and a refrigerant inlet of the condenser in the case when the outdoor unit heat exchanger 5 functions as a condenser and in the case when the indoor heat exchanger 7 functions as the condenser.

Also in Example 2, the adsorption device comprises a charging and/or discharging port 8 for charging the refrigerant circuit with refrigerant and/or discharging the refrigerant circuit. The charging and/or discharging port 8 can have a stop valve.

Again, as already the case in the system of Example 1, the refrigerant circuit of the system of Example 2 further comprises two 3-way valves as bypass valves 9, 10 and a bypass branch disposed between the two bypass valves 9, 10, wherein the adsorption device 4 is disposed on the bypass branch.

The adsorption device 4 of the system of Example 2 has a rectangular outer casing and comprises at least one adsorption material (illustrated by black spheres in Fig. 2). Thus, this example also highlights that the adsorption column can have different shapes and is not limited to tubular embodiments.

### Example 3

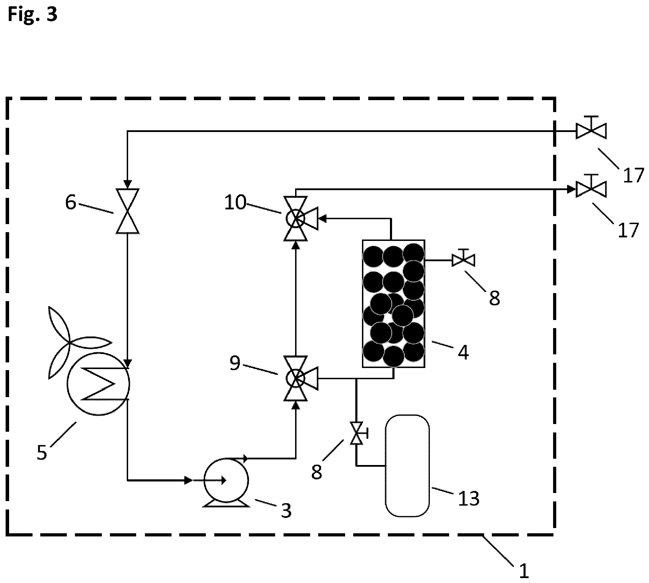

Fig. 3 shows a third example (Example 3) of a system according to the present invention. It is an example for the implementation of the adsorption device in a split type air-to-air refrigeration cycle for a heating (i.e. a split-type heat pump system). The system comprises an outdoor unit 1 and an indoor unit (not shown in Fig. 3), and also a refrigerant circuit configured by connecting a compressor 3, an adsorption device 4 for adsorbing at least moisture, oxygen, and/or nitrogen present in the refrigerant circuit, an indoor unit heat exchanger (not shown in Fig. 3) configured to function as a condenser, an expansion valve 6, and an outdoor unit heat exchanger 7 configured to function as an evaporator by piping.

Also in the system of Example 3, the adsorption device 4 is disposed in a portion of the refrigerant circuit in which the refrigerant is substantially in a gaseous state, between a refrigerant outlet of the compressor 3 and a refrigerant inlet of the condenser.

Also in Example 3, the adsorption device comprises a charging and/or discharging port 8 for charging the refrigerant circuit with refrigerant and/or discharging the refrigerant circuit. The charging and/or discharging port 8 can have a stop valve.

Furthermore, also in the system of Example 3, the refrigerant circuit of the system further comprises two 3-way valves as bypass valves 9, 10 and a bypass branch disposed between the two bypass valves 9, 10, wherein the adsorption device 4 is disposed on the bypass branch.

Moreover, the refrigerant circuit of the system of Example 3 comprises a connection to a pressurised refrigerant container 13 that is comprised by the system and that can contain all the refrigerant before filling the rest of the system with refrigerant. The refrigerant container 13 is connected to the refrigerant circuit via a further charging and/or discharging port 8 for charging the refrigerant circuit with refrigerant and/or discharging the refrigerant circuit. In another advantageous embodiment, it can also contain additional refrigerant, if the pre-charged refrigerant within the other components of the outdoor unit 1 is insufficient to fill the pipework and indoor unit 2 with refrigerant after installation. In another advantageous embodiment, it can contain a second charge of refrigerant that can be used at a later stage in the unit's lifetime, when the first charge contained within the other components of the outdoor unit 1 requires replacement.

### Example 4

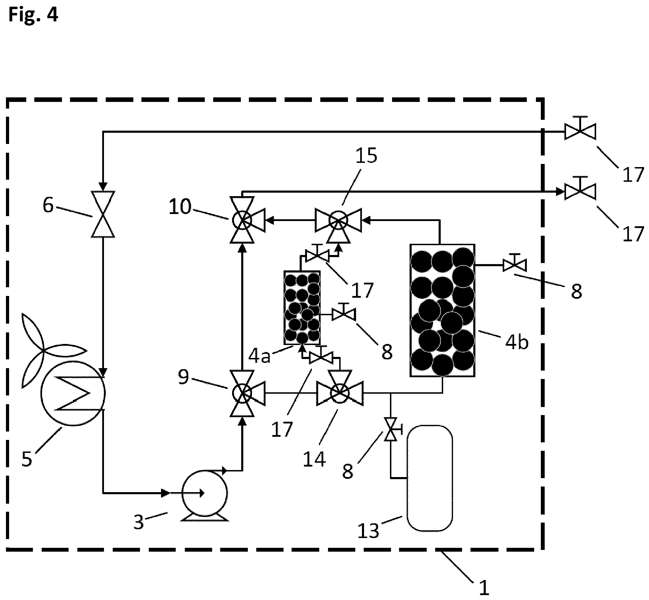

Fig. 4 shows a fourth example (Example 4) of a system according to the present invention. It is a further example for the implementation of the adsorption device in a split type air-to-air refrigeration cycle for a heating (i.e. a split-type heat pump system). The system of Example 4 is a modification of the system of Example 3 shown in Fig. 3. As in Fig. 3, the indoor unit and the indoor unit heat exchanger configured to function as a condenser of the system of Example 4 are not shown in Fig. 4.

As in Example 3, in the system of Example 4, the adsorption device 4 is disposed in a portion of the refrigerant circuit in which the refrigerant is substantially in a gaseous state, between a refrigerant outlet of the compressor 3 and a refrigerant inlet of the condenser.

In contrast to the system of Example 3, the system of Example 4 comprises two adsorption devices 4a and 4b. Furthermore, the system comprises two bypass branches, namely a first bypass branch (the left bypass branch in Fig. 4) and a second bypass branch (the right bypass branch in Fig. 4), disposed between the two bypass valves 9, 10, and also between two additional bypass valves 14, 15 which split the main bypass into the first bypass and the second bypass. The second adsorption device 4b is disposed on the second bypass branch and acts as a main adsorption device as it is also present in the systems of Examples 1 to 3. The first adsorption device 4a is disposed on the first bypass branch and acts as an additional smaller adsorption device that can be used to safely remove oxygen from the refrigerant pipework, if flammable refrigerants, e.g. R290, are used in the system.

In Example 4, each of the two adsorption devices 4a, 4b comprises a charging and/or discharging port 8 for charging the refrigerant circuit with refrigerant and/or discharging the refrigerant circuit. Each of these two charging and/or discharging ports 8 can have a stop valve.

If a flammable refrigerant is used in the system, a mixture of oxygen from the air and refrigerant should be avoided for safety reasons. In the system of Example 4, a smaller additional adsorption device 4a is used for oxygen removal prior to filling the system with refrigerant from the refrigerant container. The first adsorption device 4a is filled with an adsorption material with high affinity to oxygen. Before filling the system with refrigerant, the compressor is moving the air inside the refrigerant pipework through the first adsorption device 4a to remove oxygen. It can be beneficial to pre-pressurise the first adsorption device 4a with nitrogen to avoid low vacuum in the pipework. During the oxygen removal step, the second adsorption device 4b and the refrigerant container are bypassed.

It can be beneficial to add an optional oxygen indicator with an optional viewport to check for remaining oxygen before filling the system with propane. It can be beneficial to place the oxygen indicator either behind the first adsorption device 4a or on a separate bypass line. Once oxygen is removed from the refrigerant pipework, refrigerant is mixed with the remaining, oxygen-free air and the second adsorption device 4b is used to remove all other non-refrigerant gases from the circuit.

### Example 5

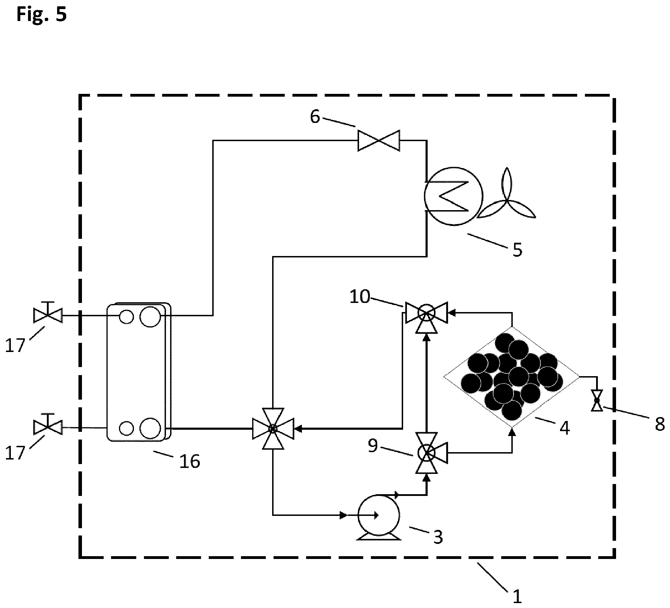

Fig. 5 shows a fifth example (Example 5) of a system according to the present invention. It is an example for a system with a packaged air-to-water heat pump outdoor unit. The system of Example 5 comprises an outdoor unit 1 and an indoor unit (not shown in Fig. 5). The refrigerant flow can be reversed using a four-way valve 12. The system comprises a refrigerant circuit configured by connecting a compressor 3, an adsorption device 4 for adsorbing at least moisture, oxygen, and/or nitrogen present in the refrigerant circuit, an outdoor unit heat exchanger 5 configured to function as a condenser or an evaporator depending on the adjustment of the four-way valve 12, an expansion valve 6, and plate heat exchanger 16 configured to function as a condenser for the refrigerant circuit or an evaporator for the refrigerant circuit depending on the adjustment of the four-way valve 12 by piping. The plate heat exchanger 16 acts as connection between the refrigerant circuit and an additional water circuit of the system that runs between the plate heat exchanger 16 and an indoor unit heat exchanger disposed in the indoor unit of the system.

Also in the system of Example 5, the adsorption device 4 is disposed in a portion of the refrigerant circuit in which the refrigerant is substantially in a gaseous state, between a refrigerant outlet of the compressor 3 and a refrigerant inlet of the condenser.

Also in Example 5, the adsorption device comprises a charging and/or discharging port 8 for charging the refrigerant circuit with refrigerant and/or discharging the refrigerant circuit. The charging and/or discharging port 8 can have a stop valve.

### Example 6

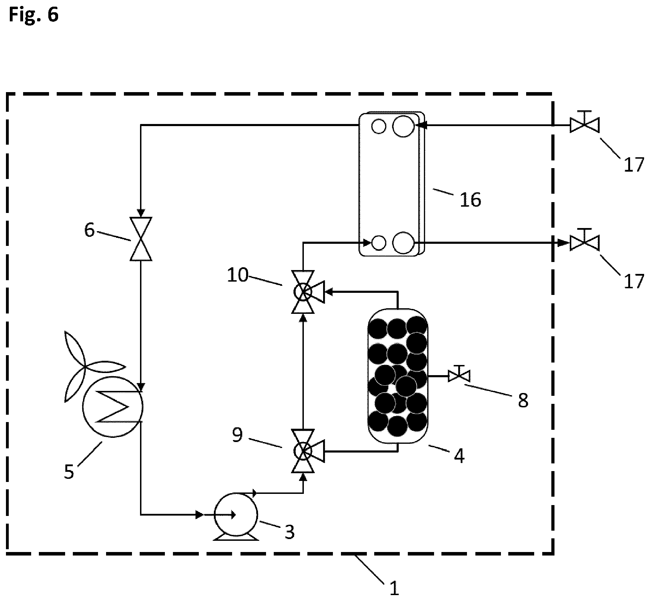

Fig. 6 shows a sixth example (Example 6) of a system according to the present invention. It is further possible to integrate the adsorption device into a packaged unit, which is shown in Example 6 for the integration into an air-to-water heat pump. The system of Example 6 comprises an outdoor unit 1 and an indoor unit (not shown in Fig. 6). The system comprises a refrigerant circuit configured by connecting a compressor 3, an adsorption device 4 for adsorbing at least moisture, oxygen, and/or nitrogen present in the refrigerant circuit, a plate heat exchanger configured to function as a condenser depending, an expansion valve 6, and an indoor unit heat exchanger 7 configured to function as an evaporator for the refrigerant circuit. The plate heat exchanger 16 acts as connection between the refrigerant circuit and an additional water circuit of the system that runs between the plate heat exchanger 16 and an indoor unit heat exchanger disposed in the indoor unit of the system.

Also in the system of Example 6, the adsorption device 4 is disposed in a portion of the refrigerant circuit in which the refrigerant is substantially in a gaseous state, between a refrigerant outlet of the compressor 3 and a refrigerant inlet of the condenser.

Also in Example 6, the adsorption device comprises a charging and/or discharging port 8 for charging the refrigerant circuit with refrigerant and/or discharging the refrigerant circuit. The charging and/or discharging port 8 can have a stop valve.

### Reference signs

- **1**: Outdoor unit
- **2**: Indoor unit
- **3**: Compressor
- **4**: Adsorption device
- **4a**: First adsorption device
- **4b**: Second adsorption device
- **5**: Outdoor unit heat exchanger
- **6**: Expansion valve
- **7**: Indoor unit heat exchanger
- **8**: Charging and/or discharging port
- **9, 10**: Bypass Valve
- **11**: Filter drier
- **12**: Four-way valve
- **13**: Refrigerant container
- **14, 15**: Additional bypass valve
- **16**: Plate heat exchanger
- **17**: Additional valve or port

## Claims

1. A split-type air conditioning and/or heat pump system comprising an outdoor unit (1) and an indoor unit (2), wherein the split-type air conditioning and/or heat pump system comprises a refrigerant circuit configured by connecting a compressor (3), at least one adsorption device (4, 4a, 4b) for adsorbing at least moisture, oxygen, and/or nitrogen present in the refrigerant circuit, a condenser, an expansion valve (6), and an evaporator by piping, and wherein the at least one adsorption device (4, 4a, 4b) is disposed in a portion of the refrigerant circuit in which the refrigerant is substantially in a gaseous state.

2. The split-type air conditioning and/or heat pump system according to claim 1, **characterized in that** the at least one adsorption device (4, 4a, 4b) is disposed in the refrigerant circuit between a refrigerant outlet of the compressor (3) and a refrigerant inlet of the condenser.

3. The split-type air conditioning and/or heat pump system according to claim 1 or 2, **characterized in that** the at least one adsorption device (4, 4a, 4b) comprises at least one adsorption material, wherein the at least one adsorption material
- is selected from the group consisting of zeolites, preferably zeolite 4A, zeolite 5A, zeolite 13X; activated alumina; silica gel; activated carbon; molecular sieve carbon; metal-organic frameworks; polymeric adsorbents; and mixtures and combinations thereof, and/or
- is present in the form of powder, in the form of beads, in the form of pellets, and/or in the form of monoliths, and/or
- is present in an amount of up to 100 kg, preferably up to 35 kg, more preferably from 0.3 kg to 2 kg, and/or
- comprises a plurality of different adsorption materials which are present as a mixture or separate from each other in the at least one adsorption device (4, 4a, 4b), and/or
- has a higher affinity towards moisture, oxygen, and/or nitrogen than towards a refrigerant flowing through the refrigerant circuit.

4. The split-type air conditioning and/or heat pump system according to any one of claims 1 to 3, **characterized in that** the at least one adsorption device (4, 4a, 4b) comprises an outer casing, wherein the outer casing preferably
- is tubular, spherical, triangular, or rectangular, and/or
- comprises or consists of a material selected from the group consisting of metals, alloys, plastics, ceramics, and also mixtures and combinations thereof, wherein the outer casing more preferably comprises or consists of at least one metal and/or at least one alloy, even more preferably of copper and/or stainless steel, and/or
- has a diameter from 25 mm to 300 mm, preferably from 50 mm to 100 mm, and/or
- has a length from 50 mm to 500 mm, preferably from 100 mm to 300 mm.

5. The split-type air conditioning and/or heat pump system according to any one of claims 1 to 4, **characterized in that** the at least one adsorption device (4, 4a, 4b) comprises
- a filter, wherein the filter preferably comprises or consists of mesh and/or glass wool, and/or
- an inlet port and an outlet port to connect the at least one adsorption device (4, 4a, 4b) to the refrigerant circuit, and/or
- an ambient air valve or port to open the at least one adsorption device (4, 4a, 4b) to the ambient air and/or to seal it from the ambient air, and/or
- a charging and/or discharging port (8) for charging the refrigerant circuit with refrigerant and/or discharging the refrigerant circuit.

6. The split-type air conditioning and/or heat pump system according to any one of claims 1 to 5, **characterized in that** the refrigerant circuit comprises at least two bypass valves (9, 10, 14, 15) disposed in a portion of the refrigerant circuit in which the refrigerant is substantially in a gaseous state, preferably between the refrigerant outlet of the compressor (3) and the refrigerant inlet of the condenser, wherein the refrigerant circuit comprises at least one bypass branch disposed between the at least two bypass valves (9, 10, 14, 15), and wherein the at least one adsorption device is disposed on the at least one bypass branch.

7. The split-type air conditioning and/or heat pump system according to claim 6, **characterized in that** the at least one bypass branch comprises at least one first bypass branch and at least one second bypass branch, wherein the at least one adsorption device (4, 4a, 4b) comprises at least one first adsorption device (4a), which is disposed on the at least one first bypass branch, and at least one second adsorption device (4b), which is disposed on the at least one second bypass branch, wherein preferably
- the refrigerant circuit comprises a connection to at least one refrigerant container (13) containing refrigerant that can be added to the refrigerant circuit, the connection to the at least one refrigerant container (13) being disposed on the at least one second bypass branch upstream of the at least one second adsorption device (4b), and/or
- the at least one first adsorption device (4a) comprises at least one adsorption material having an oxygen affinity **characterized by** a separation factor *α* > 10, preferably *α* > 100.

8. The split-type air conditioning and/or heat pump system according to any one of claims 1 to 7, **characterized in that**
- the outdoor unit (1) comprises the compressor (3), the at least one adsorption device (4, 4a, 4b), the expansion valve (6), and an outdoor unit heat exchanger (5) which is configured to function as the condenser, is configured to function as the evaporator, or is configured to function as the condenser or the evaporator, and/or
- the indoor unit (2) comprises an indoor unit heat exchanger (7) which is configured to function as the condenser, is configured to function as the evaporator, or is configured to function as the condenser or the evaporator.

9. The split-type air conditioning and/or heat pump system according to any one of claims 1 to 8, **characterized in that** the refrigerant circuit comprises
- at least one filter drier (11) for removing moisture, wherein the at least one filter drier (11) is preferably disposed between a refrigerant outlet of the condenser and a refrigerant inlet of the expansion valve (6), and/or
- a four-way valve (12) with which the refrigerant flow within a part of the refrigerant circuit can be reversed,
- a connection to at least one refrigerant container (13) containing refrigerant that can be added to the refrigerant circuit, wherein the connection to the at least one refrigerant container (13) is preferably disposed between a refrigerant outlet of the evaporator and the at least one adsorption device (4, 4a, 4b), more preferably between a refrigerant outlet of the compressor (3) and the at least one adsorption device (4, 4a, 4b).

10. Method of gassing and/or re-gassing a refrigerant circuit of a split-type air conditioning and/or heat pump system according to any one of claims 1 to 9, the method comprising:
a) Filling refrigerant into the refrigerant circuit so as to allow the refrigerant flowing through the refrigerant circuit and thus through the at least one adsorption device (4, 4a, 4b), and
b) Operating the split-type air conditioning and/or heat pump system for a period of time in order for at least moisture, oxygen, and/or nitrogen present in the refrigerant circuit to be adsorbed by the at least one adsorption device (4, 4a, 4b).

11. Method according to claim 10, **characterized in that**
- before step a), the refrigerant circuit is formed by connecting the outdoor unit (1) with the indoor unit (2) via pipes, and/or
- the period of time for which the split-type air conditioning and/or heat pump system is operated in step b) is from 0.5 h to 96 h, preferably from 1 h to 48 h.

12. Method according to claim 10 or 11, **characterized in that** the refrigerant circuit comprises at least two bypass valves (9, 10, 14, 15) disposed in a portion of the refrigerant circuit in which the refrigerant is substantially in a gaseous state, preferably between the refrigerant outlet of the compressor (3) and the refrigerant inlet of the condenser, wherein the refrigerant circuit comprises at least one bypass branch extending between the at least two bypass valves (9, 10, 14, 15), wherein the at least one adsorption device (4, 4a, 4b) is disposed on the at least one bypass branch, and wherein, after the period of time has elapsed, at least two of the at least two bypass valves (9, 10, 14, 15) are closed to cut off the bypass branch from the refrigerant flow.

13. Method according to claim 12, **characterized in that** the at least one bypass branch comprises at least one first bypass branch and at least one second bypass branch, wherein the at least one adsorption device (4, 4a, 4b) comprises at least one first adsorption device (4a), which is disposed on the at least one first bypass branch, and at least one second adsorption device (4b), which is disposed on the at least one second bypass branch, wherein preferably
- the refrigerant circuit comprises a connection to at least one refrigerant container (13) containing refrigerant that can be added to the refrigerant circuit, the connection to the at least one refrigerant container (13) being disposed on the at least one second bypass branch upstream of the at least one second adsorption device (4b), wherein preferably at least a part of the refrigerant contained in the refrigerant container (13) is added to the refrigerant circuit in step a), in step b), and/or after step b), and/or
- the at least one first adsorption device (4a) comprises at least one adsorption material having an oxygen affinity **characterized by** a separation factor *α* > 10, preferably *α* > 100,wherein, before step a), the compressor is moving air inside the refrigerant circuit via the at least one first bypass branch through the at least one first adsorption device (4a).

14. Method for regenerating at least one adsorption device (4, 4a, 4b) of a split-type air conditioning and/or heat pump system according to any one of claims 1 to 9, wherein the at least one adsorption device (4, 4a, 4b) comprises an ambient air valve or port to open the at least one adsorption device to the ambient air and/or to seal it the from the ambient air, the method comprising
- opening the ambient air valve or port to the ambient air for a period of time, and/or
- disassembling the at least one adsorption device (4, 4a, 4b) from the split-type air conditioning and/or heat pump system and heating the disassembled at least one adsorption device (4, 4a, 4b).

15. Method according to claim 14, **characterized in that**
- the period of time for which the ambient air valve is opened up to 48 h, preferably from 0.01 h to 1 h, and/or
- the at least one adsorption device (4, 4a, 4b) is heated while the ambient air valve is opened, preferably at a temperature up to 500 °C, preferably from 150 °C to 300 °C, and/or
- the disassembled at least one adsorption device (4, 4a, 4b) is heated at a temperature from 50 °C to 500 °C, preferably from 150 °C to 300 °C, for a period of time from 5 min to 4 h, preferably, from 30 min to 90 min.
